# EUROPEAN PATENT APPLICATION

(11) **EP 4 624 786 A1**
(43) Date of publication of application: **01.10.2025**
(21) Application number: 23893828.6
(22) Date of filing: 21.11.2023
(51) Int. Cl.: F16K 11/065, F16K 27/04

(54) **SLIDING BLOCK ASSEMBLY, VALVE, AND AIR CONDITIONING SYSTEM**

(30) Priority: 21.11.2022 CN 202223093779 U
(71) Applicant: Zhejiang Dunan Artificial Environment Co., Ltd., Shaoxing Zhejiang 311800 (CN)
(72) Inventor: ZHU, Jiafeng, Shaoxing, Zhejiang 311800 (CN); XUAN, Qijie, Shaoxing, Zhejiang 311800 (CN); SUN, Junjie, Shaoxing, Zhejiang 311800 (CN)
(74) Representative: Petraz, Gilberto Luigi
(86) International application number: PCT/CN2023/132922
(87) International publication number: WO 2024/109738

(57) **Abstract**

A sliding block assembly, a valve, and an air conditioning system. The valve comprises a valve body (101) and a valve core. The valve body (101) is provided with an inlet (102). The valve core is located inside of the valve body (101). The valve core comprises a sliding block (103). A boss (104) is provided on the side of the sliding block (103) close to the inlet (102), and the sliding block (103) can move relative to the valve body (101), so that the boss (104) blocks or opens the inlet (102). The circumferential edge of the boss (104) is provided with at least one notch (105, 106), and the notch (105, 106) is configured to enable the boss (104) to avoid the inlet (102) when the inlet (102) is in an open state.

## Description

### CROSS-REFERENCE

The present disclosure claims the priority of Chinese patent application No. 202223093779.5 entitled "slider assembly, valve and air Conditioning System" filed on November 21, 2022, which is incorporated by reference herein in its entirety.

### TECHNICAL FIELD

The present disclosure relates to the technical field of valves, in particular, relates to a slider assembly, a valve and an air conditioning system.

### BACKGROUND

In the related art, a valve (e.g., a four-way valve) includes a valve body and a slider disposed in an inner cavity of the valve body. The valve body is provided with an inlet and a plurality of switching openings, and the slider moves in the inner cavity of the valve body to achieve communication between the inlet and one of the switching openings. However, when the inlet communicates with one of the switching openings, the related slider may hinder the flow of fluid from the inlet, leading to a reduced flow.

### SUMMARY

According to a first aspect, the present disclosure provides a valve, the valve includes a valve body and a valve core, wherein the valve body is provided with an inlet; the valve core is located inside the valve body and includes a slider, the slider is provided with a boss on the side close to the inlet, and the slider is movable relative to the valve body so that the boss blocks or opens the inlet; a circumferential edge of the boss is provided with at least one notch configured to cause the boss to avoid the inlet when the inlet is in an open state.

According to a second aspect, the present disclosure also provides a slider assembly, the slider assembly is used to be slidably mounted within a valve body to block or open an inlet of the valve body; the slider assembly includes a slider and a boss, the boss is connected with the slider, the boss is capable of blocking or opening the inlet of valve body, the circumferential edge of the boss is provided with at least one notch, and the notch is used to cause the boss to avoid the inlet of the valve body when the inlet of the valve body is in an open state.

According to a third aspect, the present disclosure also provides an air conditioning system including the valve described above.

### BRIEF DESCRIPTION OF THE DRAWINGS

In order to more clearly illustrate the technical solutions in specific embodiments of the present disclosure or the prior art, the drawings that are required to describe the specific embodiments or the prior art will be briefly introduced below. Obviously, the drawings that are described below are some embodiments of the present disclosure, and persons of ordinary skill in the art may also obtain other drawings according to these drawings without paying creative work.
FIG. 1 is a schematic structural view of the valve provided in an embodiment of the present disclosure;
FIG. 2 is a schematic view of the valve provided in an embodiment of the present disclosure in a closed state;
FIG. 3 is partially enlarged view at A in FIG. 2;
FIG. 4 is a schematic view of the valve provided in an embodiment of the present disclosure in a state in which the inlet is communicated with the third opening;
FIG. 5 is a schematic view of the valve provided in an embodiment of the present disclosure in a state in which the inlet is communicated with the first opening;
FIG. 6 is a schematic structural view of the slider assembly provided in an embodiment of the present disclosure;
FIG. 7 is a top view of the slider assembly provided in an embodiment of the present disclosure;
FIG. 8 is a cross-sectional view along line B-B of FIG. 7;
FIG. 9 is a front view of the slider assembly provided in an embodiment of the present disclosure;
FIG. 10 is a cross-sectional view along line C-C of FIG. 9.

### LIST OF REFERENCE NUMERALS:

101-valve body; 102-inlet; 103-slider; 104-boss; 105-first notch; 106-second notch; 107-connecting tube; 108-flange; 109-guide frame; 110-communication opening; 111-first opening; 112-second opening; 113-third opening;114-concave cavity.

### DETAILED DESCRIPTION

Hereinafter, the technical solutions of the present disclosure will be described clearly and comprehensively in combination with the embodiments. Obviously, the described embodiments are parts of the embodiments of the present disclosure, rather than all of the embodiments thereof. All the other embodiments obtained by those of ordinary skill in the art based on the embodiments of the present disclosure without paying creative work fall into the protection scope of the present disclosure.

In the description of the present disclosure, it is to be understood that the terms "center", "upper", "lower", "left", "right", "vertical", "horizontal", "inner", "outer" and the like, which indicate orientation or positional relationships, are understood based on the orientation or positional relationships shown in the drawings, they are merely used for the convenience of describing the present disclosure and simplifying the description, rather than indicating or implying that the device or element referred to must have a particular orientation, and be constructed and operated in a particular orientation, and therefore they should not be construed as limiting the present disclosure. In addition, the terms "first", "second" and "third" are only used for the purpose of description and should not be construed as indicating or implying a relative importance.

In the description of the present disclosure, it should be noted that the terms "install", "couple", and "connect" should be understood broadly, and may for example refer to a fixed connection, or a detachable connection, or an integral connection; it may be a mechanical connection or an electrical connection; it can be a direct connection or an indirect connection through an intermediate medium, and it can be a communication within the two elements, unless otherwise explicitly specified and defined. The specific meanings of the above terms in the present disclosure should be understood by those skilled in the art according to the specific conditions.

The present disclosure provides a slider assembly, a valve and an air conditioning system to alleviate the technical problem that the slider in the existing valve that exists among the prior art may hinder the fluid, which is from the inlet, from flowing , and lead to the flow reduction.

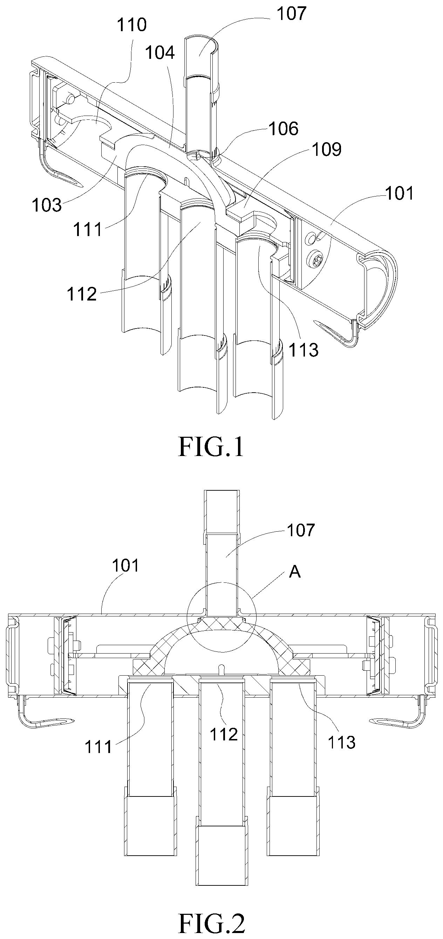

Referring to FIGs. 1 to 10, the present embodiment provides a valve, which includes a valve body 101 and a valve core, wherein the valve body 101 is provided with an inlet 102; the valve core is located inside the valve body 101 and includes a slider 103, the slider 103 is provided with a boss 104 on the side close to the inlet 102, and the slider 103 is movable relative to the valve body 101 so that the boss 104 blocks or opens the inlet 102; a circumferential edge of the boss 104 is provided with at least one notch configured to cause the boss 104 to avoid the inlet 102 when the inlet 102 is in an open state.

In the valve provided by the embodiment, the boss 104 is disposed on the side of the slider 103 close to the inlet 102, and when the slider 103 moves relative to the valve body 101, the boss 104 may block the inlet 102 or open the inlet 102; because the circumferential edge of the boss 104 is provided with at least one notch, when the boss 104 is located on one side of the inlet 102, the boss 104 may avoid the inlet 102, that is, the boss 104 may not obscure the inlet 102, so that the fluid cannot be hindered from entering from the inlet 102, and the flow may not be reduced.

The fluid entering the inlet 102 may be a gas, a liquid, or a mixture of gas and liquid depending on the application scenario of the valve.

The valve provided by the present embodiment may be a one-way valve or a multi-way valve, for example, as shown in FIGs. 2, 4 and 5, the slider 103 moves relative to the valve body 101. When the slider 103 and the boss 104 are located below the inlet 102, the inlet 102 is blocked by the boss 104; and when the slider 103 and the boss 104 are located at one side (e.g., left or right side) of the inlet 102, the inlet 102 is in an open state.

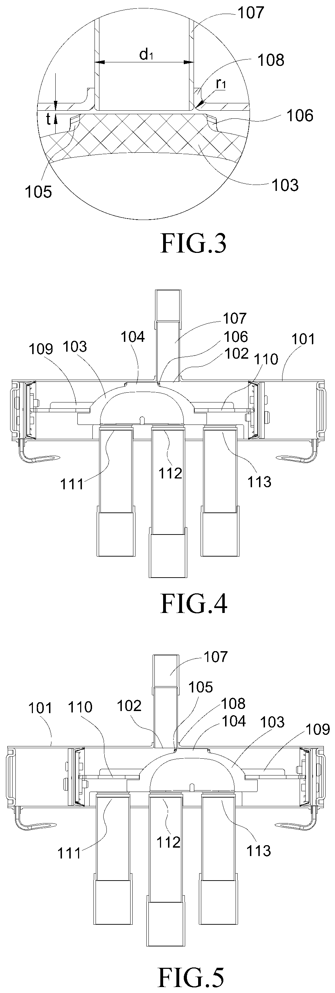

In some embodiments, referring to FIGs. 1 and 4, the valve core includes a guide frame 109 and a slider assembly, wherein the slider assembly includes a slider 103 and a boss 104. Exemplarily, the slider 103 and the boss 104 are integrally formed; two ends of the guide frame 109 are respectively provided with a communication opening 110, the slider 103 is mounted between the two ends of the guide frame 109, and the slider 103 drives the guide frame 109 to move, so that the inlet 102 is communicated with one of the communication openings 110.

The valve body 101 has an inner cavity inside, and end caps are disposed at two ends of the valve body 101, so that the inner cavity of the valve body 101 forms a relatively closed cavity. The inner cavity of the valve body 101 is a cylindrical cavity, and the slider 103 may reciprocate along the axis of the inner cavity of the valve body 101 to realize the opening and closing and switching of the valve.

In one embodiment, the inlet 102 is a circular hole formed in the sidewall of the valve body 101. Accordingly, the notch is a curved notch, and the curved notch is adapted to the edge of the circular hole.

It should be noted that, when the inlet 102 is a hole with other shapes, the shape of the notch is adapted to the profile of the edge of the inlet 102 close to the notch, so as to achieve the purpose of avoiding.

In one embodiment, referring to FIG. 3, the valve further includes a connecting tube 107, the connecting tube 107 is communicated with the inlet 102, one end of the connecting tube 107 is located inside the inlet 102, the radius of the curved notch is r₁, r₁>0.5d₁, wherein d₁ is the outer diameter of the connecting tube 107.

Exemplarily, the outer wall of the connecting tube 107 is welded to the edge of the inlet 102. The radius r₁ of the curved notch is r₁>0.5d₁, so that the boss 104 may not generate throttling action on fluid entering from the connecting tube 107, and when the valve is applied to a cooling and heating state of an air conditioning system, the slider 103 may not influence the medium circulation capacity at a high-pressure side.

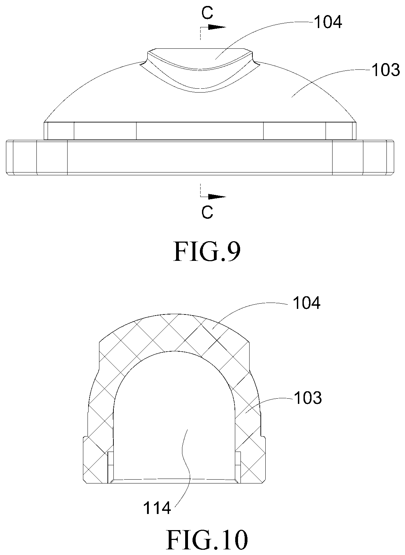

In one embodiment, the valve body 101 is in the form of a hollow cylindrical structure, the inlet 102 is located on the circumferential sidewall of the valve body 101, and as shown in FIGs. 9 and 10, the surface of the boss 104 toward the inlet 102 is a circular arc surface adapted to the inner surface of the valve body 101. Because the inlet 102 is located on the circumferential sidewall of the valve body 101, and the end surface of the inlet 102 is in the form of a circular arc surface, the surface towards the inlet 102 of the boss 104 is the circular arc surface adapted to the inner surface of the valve body 101, which can ensure that the boss 104 is adapted to the end surface of the inlet 102, which is conducive to reducing the radial distance between the boss 104 and the end surface of the inlet 102, thereby improve the blocking effect of the boss 104 on the inlet 102. After the valve is closed, the pressure inside the valve body 101 may be significantly reduced.

In one embodiment, referring to FIG. 3, the radial distance between the surface of the boss 104 toward the inlet 102 and the inner surface of the valve body 101 is t, 0<t≤0.45 cm. The radial distance between the surface of the boss 104 toward the inlet 102 and the inner surface of the valve body 101 is controlled within 0.45cm, so that the blocking effect on the inlet 102 can be effectively improved, and exemplarily the blocking effect can be improved by more than 50%.

Exemplarily, the radial distance t between the surface of the boss 104 toward the inlet 102 and the inner surface of the valve body 101 may be, but is not limited to, 0.005 cm, 0.008cm, 0.01cm, 0.02cm, 0.03cm, 0.04cm, 0.05cm, 0.06cm, 0.07cm, 0.08cm, 0.1cm, 0.12cm, 0.14cm, 0.15cm, 0.16cm, 0.18cm, 0.2cm, 0.22cm, 0.24cm, 0.26cm, 0.28cm, 0.3cm, 0.32cm, 0.34cm, 0.36cm, 0.38cm, 0.4cm, 0.41cm, 0.42cm, 0.43cm, 0.44cm, 0.441cm, 0.442cm, 0.443cm, 0.445cm, 0.447cm or 0.45cm.

In one embodiment, the valve is a four-way valve.

In one embodiment, the number of the notches is two, and the two notches are disposed opposite each other radially along the boss 104.

Specifically, the two notches are named as a first notch 105 and a second notch 106, respectively, and the first notch 105 and the second notch 106 are disposed at both ends of the boss 104 in the radial direction parallel to the axis of the valve body 101.

When the slider 103 is located at either side of the inlet 102, the notch at the corresponding position may achieve the purpose of avoiding the inlet 102.

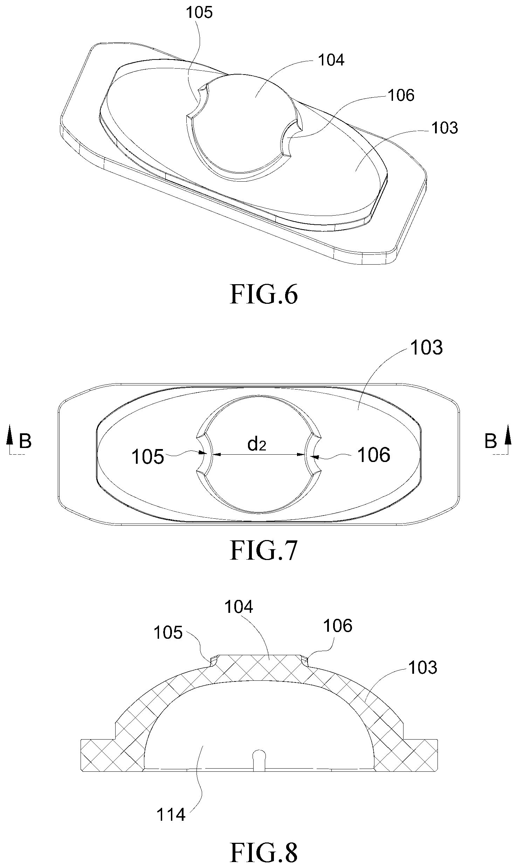

In one embodiment, referring to FIG. 3, the inlet 102 of the valve body 101 is provided with a flange 108, and a fillet is disposed between the flange 108 and the valve body 101, as shown in FIGs. 3 and 7, the distance between the two notches is d₂, d₂ > d₁+2r₂, wherein d₁ is the outer diameter of the connecting tube 107, and r₂ is the radius of the fillet. Referring to FIG. 7, the distance between the two notches refers to the shortest distance between the first notch 105 and the second notch 106, and when the first notch 105 and the second notch 106 are both curved notches, the shortest distance between the first notch 105 and the second notch 106 is the distance between the apexes of the arc-shaped edges of the two curved notches.

Exemplarily, the outer side surface of the boss 104 is a cylindrical surface provided with a notch, for example, a circle-cylindrical surface, and the outer side surface of the boss 104 may be provided with other shapes as long as the boss 104 has a state capable of blocking the inlet 102 during the movement of the slider 103. For example, a plurality of planes are arranged in an end-to-end connection mode, and notches are formed on the planes; or an annular curved surface is arranged, and the annular curved surface is provided with a notch.

Exemplarily, the flange 108 is located outside the valve body 101, which may reduce the gap between the boss 104 and the valve body 101, that is, avoid the phenomenon that the flange 108 is located inside the valve body 101 to occupy the internal space of the valve body 101.

The distance between the two notches is d₂>d₁+2r₂ to ensure that when the slider 103 is located right below the inlet 102, the boss 104 can completely cover the inlet 102, and fluid can be effectively prevented from flowing into the valve body 101, thereby improving the blocking effect.

It should be noted that one end of the connecting tube 107 may also be sleeved outside the flange 108.

In one embodiment, referring to FIGs. 1 and 2, the valve body 101 is provided with a first opening 111, a second opening 112 and a third opening 113, the second opening 112 is opposite to the inlet 102, the second opening 112 is located between the first opening 111 and the third opening 113, the boss 104 may be located at the side of the inlet 102 close to the first opening 111 to communicate the inlet 102 with the third opening 113, wherein the notch close to the third opening 113 is adapted to a circumferential edge of the inlet 102; the boss 104 may also be located at the side of the inlet 102 close to the third opening 113 to communicate the inlet 102 with the first opening 111, wherein the notch close to the first opening 111 is adapted to the circumferential edge of the inlet 102.

Specifically, the first opening 111, the third opening 113 and the second opening 112 are located at the same side of the valve body 101. The first opening 111, the second opening 112, and the third opening 113 are connected with a pipeline, respectively.

When the slider 103 moves to the position as shown in FIG. 4, the boss 104 is located at the side of the inlet 102 close to the first opening 111, so that the inlet 102 is communicated with the third opening 113, wherein the second notch 106 is located outside the circumferential edge of the inlet 102, that is, the second notch 106 avoids the fluid flowing from the inlet 102, and the boss 104 does not limit the flow of the fluid.

When the slider 103 moves to the position as shown in FIG. 5, the boss 104 is located at the side of the inlet 102 close to the third opening 113, so that the inlet 102 is communicated with the first opening 111, wherein the first notch 105 is located outside the circumferential edge of the inlet 102, that is, the first notch 105 avoids the fluid flowing from the inlet 102, and the boss 104 does not limit the flow of the fluid.

This embodiment also provides a slider assembly, which is used for being slidably mounted inside the valve body so as to block or open the inlet of the valve body; referring to FIGs. 6 to 10, the slider assembly includes a slider 103 and a boss 104, the boss 104 is connected with the slider 103, the boss 104 may block or open the inlet of the valve body, and the circumferential edge of the boss 104 is provided with at least one notch, which is used to cause the boss 104 to avoid the inlet of the valve body when the inlet of the valve body is in an open state.

The slider assembly provided by this embodiment may be applied to the valve provided by this embodiment, and the notch is used to cause the boss 104 to avoid the inlet 102 of the valve body 101 when the inlet 102 of the valve body 101 is in an open state.

It should be noted that, the slider assembly provided by this embodiment may also be applied to an existing valve.

Exemplarily, the notch is a curved notch, the number of the curved notches is two, and the two curved notches are arranged in an opposite way.

In some embodiments, the side of the slider 103 away from the boss 104 is provided with a concave cavity 114. Exemplarily, when the slider assembly is located at the side of the inlet 102 close to the first opening 111, the inlet 102 is communicated with the third opening 113, and the second opening 112 is communicated with the first opening 111 through the concave cavity 114.

This embodiment also provides an air conditioning system which includes the valve provided by this embodiment.

In the air conditioning system provided by this embodiment, due to the use of the valve provided by this embodiment, when the boss 104 is located at one side of the inlet 102, the boss 104 can avoid the inlet 102, that is, the boss 104 may not obscure the inlet 102, so that fluid cannot be hindered from entering from the inlet 102, the flow cannot be reduced, thereby improving the refrigeration effect.

In addition, when the slider 103 moves to a position right below the inlet 102, the boss 104 can effectively block the inlet 102, so that the pressure in the valve body 101 is obviously reduced, and the safety of the system is improved.

It should be noted that the air conditioning system further includes a compressor, an evaporator, a condenser, etc., and the connection relationship and the operation principles of cooling and heating are the prior art and will not be described in detail herein.

Finally, it should be noted that the above embodiments are only used to illustrate the technical solutions of the present disclosure but not limiting thereof; although the detailed description is made to the present disclosure with reference to the above embodiments, those of ordinary skill in the art should understand that modification can be made to the technical solutions described in the respective embodiments as described above or equivalent replacement can be made to a part of technical features therein, and such modification or replacement do not make the essences of corresponding technical solutions depart from the scope of the technical solutions of respective embodiments of the present disclosure.

## Claims

1. A valve comprising a valve body and a valve core, wherein the valve body is provided with an inlet; the valve core is located inside the valve body and comprises a slider, the slider is provided with a boss on a side close to the inlet, and the slider is movable relative to the valve body so that the boss blocks or opens the inlet; a circumferential edge of the boss is provided with at least one notch configured to cause the boss to avoid the inlet when the inlet is in an open state.

2. The valve according to claim 1, wherein the notch is a curved notch.

3. The valve according to claim 2, wherein the valve further comprises a connecting tube, the connecting tube is communicated with the inlet, one end of the connecting tube is located inside the inlet, the radius of the curved notch is r₁, r₁ >0.5d₁, wherein d₁ is the outer diameter of the connecting tube.

4. The valve according to claim 1, wherein the valve body is of hollow cylindrical structure, the inlet is located on the circumferential sidewall of the valve body, and the surface of the boss toward the inlet is a circular arc surface adapted to the inner surface of the valve body.

5. The valve according to claim 1, wherein the distance between the surface of the boss toward the inlet and the inner surface of the valve body is t, and 0<t≤0.45 cm.

6. The valve according to any one of claims 1 to 5, wherein the number of the notches is two, and the two notches are symmetrically disposed along the axis of the boss.

7. The valve according to claim 6, wherein the valve further comprises a connecting tube; the inlet of valve body is provided with a flange, the flange is connected with the connecting tube, a fillet is disposed between the flange and the valve body, the distance between the two notches is d₂, d₂ > d₁+2r₂, wherein d₁ is the outer diameter of the connecting tube, and r₂ is the radius of the fillet.

8. The valve according to claim 7, wherein the valve body is provided with a first opening, a second opening and a third opening, the second opening is opposite to the inlet, the second opening is located between the first opening and the third opening, the boss may be located on a side of the inlet close to the first opening so that the inlet is in communication with the third opening, wherein the notch close to the third opening is located outside the circumferential edge of the inlet; the boss may also be located on a side of the inlet close to the third opening so that the inlet is communicated with the first opening, wherein the notch close to the first opening is located outside the circumferential edge of the inlet.

9. A slider assembly, wherein the slider assembly is used to be slidably mounted within a valve body to block or open an inlet of the valve body; the slider assembly comprises a slider and a boss, the boss is connected with the slider, the boss is capable of blocking or opening the inlet of valve body, the circumferential edge of the boss is provided with at least one notch, and the notch is used to cause the boss to avoid the inlet of the valve body when the inlet of the valve body is in an open state.

10. An air conditioning system comprising the valve of any one of claims 1 to 8.
